# EUROPÄISCHE PATENTSCHRIFT

(11) **EP 1 265 018 B1**
(45) Veröffentlichungstag und Bekanntmachung des Hinweises auf die Patenterteilung: **29.06.2005**
(21) Anmeldenummer: 02010900.5
(22) Anmeldetag: 16.05.2002
(51) Int. Cl.: F16L 13/14

(54) **Rohrverbindungsanordnung**
Pipe assembly arrangement
Assemblage de raccordement d'un tuyau

(30) Priorität: 07.06.2001 DE 20109547 U; 25.01.2002 DE 20201072 U
(43) Veröffentlichungstag der Anmeldung: 11.12.2002
(73) Patentinhaber: VIEGA GmbH & Co. KG., 57439 Attendorn (DE); Nussbaum AG Metallgiesserei und Armaturenfabrik, 4601 Olten (CH)
(72) Erfinder: Viegener, Walter, 57439 Attendorn (DE); Gysin, Balthasar, 4600 Olten (CH)
(74) Vertreter: Dantz, Jan Henning

(56) Entgegenhaltungen:
- EP-A- 0 530 404
- DE-A- 19 817 136
- DE-C- 19 929 010
- US-A- 3 984 988

## Beschreibung

Die vorliegende Erfindung betrifft ein Pressrohrverbindungsanordnung, mit einem Stützrohr, das einen in ein Rohr einfügbaren Stutzen und einen sich daran anschließenden aus dem Rohr herausragenden Abschnitt aufweist, wobei in dem Bereich des Stutzens eine Presshülse um das Rohr angeordnet ist.

Zum Herstellen einer Pressverbindung sind beispielsweise aus der Offenlegungsschrift DE 198 17 136 A1 und der Patentschrift 199 29 010 C1 Stützrohre bekannt, die in ein Rohr eingeschoben werden, um anschließend das Rohr auf die Stützhülse zu verpressen und somit eine abgedichtete Verbindung herzustellen. Das Rohr kann dabei als reines Kunststoffrohr oder als Verbundrohr ausgebildet sein und von einer Presshülse aus Metall umgeben sein. An der Stützhülse kann dann ein weiteres Bauteil, wie eine Armatur oder ein Fitting angeschlossen werden, um ein Leitungssystem zusammenzustellen. Nachteilig bei dieser Art der Verbindungstechnik ist, dass nach dem Einschieben der Stützhülse schon eine vorläufige Dichtung zwischen dem Rohr an der Stützhülse erreicht werden kann. Falls das Verpressen der Presshülse bzw. des Rohres vergessen wird, tritt die Undichtigkeit erst nach einiger Zeit auf und kann erhebliche Schäden herbeiführen.

Aus der EP 530 404 ist eine Rohrverbindung bekannt, bei der eine Stützhülse zwei Anschlussbereiche aufweist, die jeweils in ein Rohr eingeschoben werden können. Die Rohre bestehen aus einem verpressbaren Material und sind außen von Presshülsen umgeben, die dann nach dem Verpressen das Rohr außen abstützen. In den Presshülsen sind benachbart zu dem Bund Kontrollöffnungen vorgesehen, damit der Monteur eine visuelle Kontrolle durchführen kann, ob das Rohr auf den Anschlussbereich bis zu dem eingeschoben ist.

Es ist daher Aufgabe der vorliegenden Erfindung, eine Pressrohrverbindungsanordnung zu schaffen, die vor dem Verpressen eine gewollte Undichtigkeit bei Einfügung eines Rohres erzeugt, die durch das Verpressen des Rohres abdichtbar ist.

Diese Aufgabe wird mit einer Pressrohrverbindungsanordnung mit den Merkmalen des Anspruches 1 gelöst.

Wenn in dem Stützrohr mindestens eine durchgehende Öffnung vorgesehen ist, die durch Verpressen des Rohres im Bereich des Stutzens abdichtbar ist, kann vor dem Verpressen ein Fluid aus dem Rohrleitungssystem nach außen treten, so dass ein versehentliches Vergessen des Verpressens umgehend entdeckt wird. Erst durch das Verpressen wird der durch die Öffnung gebildete Strömungskanal verschlossen, so dass eine dauerhaft dichte Verbindung bereitgestellt wird.

Gemäß einer bevorzugten Ausführungsform der Erfindung ist die durchgehende Öffnung im wesentlichen in radialer Richtung in dem Stutzen ausgebildet und wird dann beim Verpressen durch das Rohr verschlossen. Durch die Ausbildung in radialer Richtung kann Material des Rohres in die Mündung der Öffnung hineingedrückt werden, so dass die Öffnung stopfenartig verschlossen wird.

Gemäß einer weiteren Ausführungsform erstreckt sich die durchgehende Öffnung im wesentlichen in axialer Richtung durch den Stutzen und wird beim Verpressen durch eine Verformung des Stutzens verschlossen. Dabei kann die Öffnung dicht unterhalb der äußeren Oberfläche des Stutzens ausgebildet sein, damit auch geringe Presskräfte ausreichen, um die axiale Öffnung zu verschließen.

Vorzugsweise besitzt die Öffnung oder besitzen die Öffnungen einen Durchmesser von 0,1 bis 3 mm, abhängig vom Einsatzzweck und dem Material des Stützrohres.

Um eine stabile Pressverbindung herstellen zu können, sind vorzugsweise an dem Stutzen Rippen angeformt, die sich beim Verpressen in das Material des Rohres eingraben. Dabei kann zwischen den Rippen auch eine ringförmige Vertiefung zur Aufnahme eines Dichtringes vorgesehen sein. Eine radiale Öffnung befindet sich dann bevorzugt an der zum Rohrende hin gewandten Seite des Dichtringes.

Gemäß einer weiteren Ausführungsform erstreckt sich die Öffnung von einer Innenseite des Stützrohres zu einem Dichtring an einer Außenseite des Stützrohres, wobei durch die Öffnung im unverpressten Zustand ein Strömungskanal zwischen Innenseite und Außenseite des Stützrohres gebildet ist. Beim Verpressen kann somit eine Abdichtung durch Eindrücken des Dichtringes in die Öffnung erfolgen. Der Strömungskanal wird vorzugsweise dadurch gebildet, dass der äußere Mündungsabschnitt der Öffnung sich im Bereich des Dichtringes konisch erweitert, so dass ein Spalt zwischen Dichtring und Stützrohr im unverpressten Zustand gebildet ist.

Wenn die Öffnung unterhalb des Dichtringes einen kleineren Querschnitt besitzt als der Dichtring, kann auf einfache Weise beim Verpressen der Dichtring in die Öffnung gedrückt werden, um eine dauerhafte sichere Abdichtung zu erreichen.

Das Stützrohr ist bevorzugt aus Metall oder Kunststoff ausgebildet, wobei auch andere geeignete Materialien zum Einsatz kommen können.

Die Erfindung wird nachfolgend anhand von drei Ausführungsbeispielen mit Bezug auf die beigefügten Zeichnungen näher erläutert. Es zeigen:
- Fig. 1: eine perspektivische teilweise geschnittene Ansicht eines ersten Ausführungsbeispieles eines erfindungsgemäßen Stützrohres im montierten Zustand;
- Fig. 2: eine Querschnittsansicht des montierten Stützrohres der Fig. 1;
- Fig. 3: eine geschnittene Seitenansicht entlang der Linie A-A der Fig. 2;
- Fig. 4: eine perspektivische Ansicht des Stützrohres der Fig. 1;
- Fig. 5: eine geschnittene Seitenansicht eines zweiten Ausführungsbeispieles eines erfindungsgemäßen Stützrohres im montierten Zustand, und
- Fig. 6: eine Detailansicht eines dritten Ausführungsbeispiels.

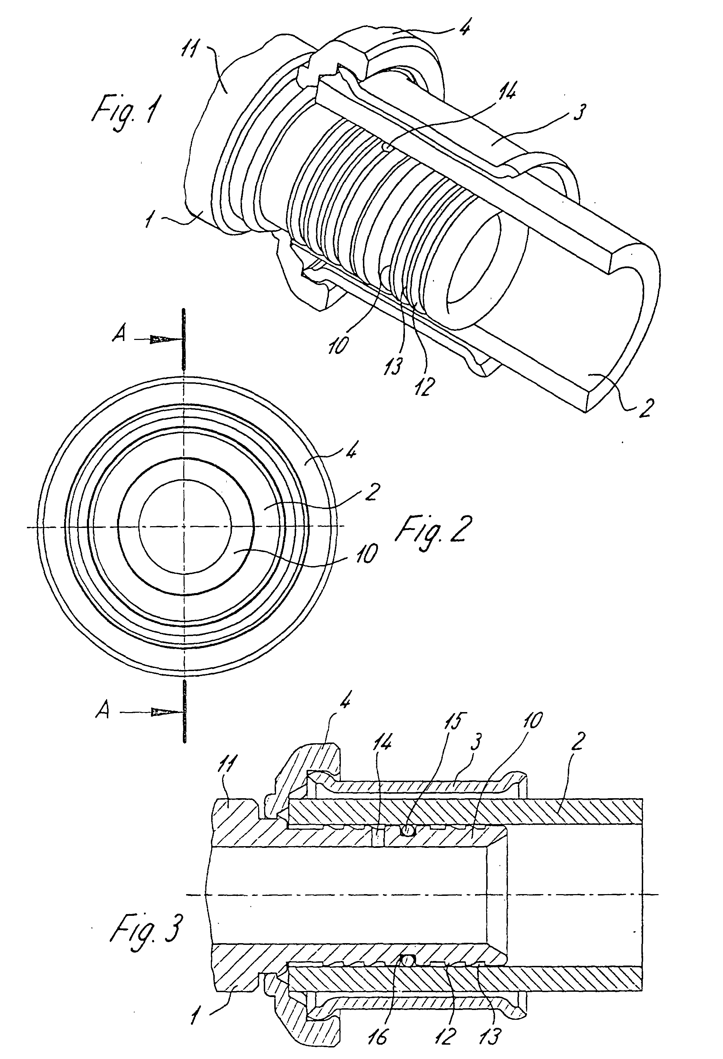

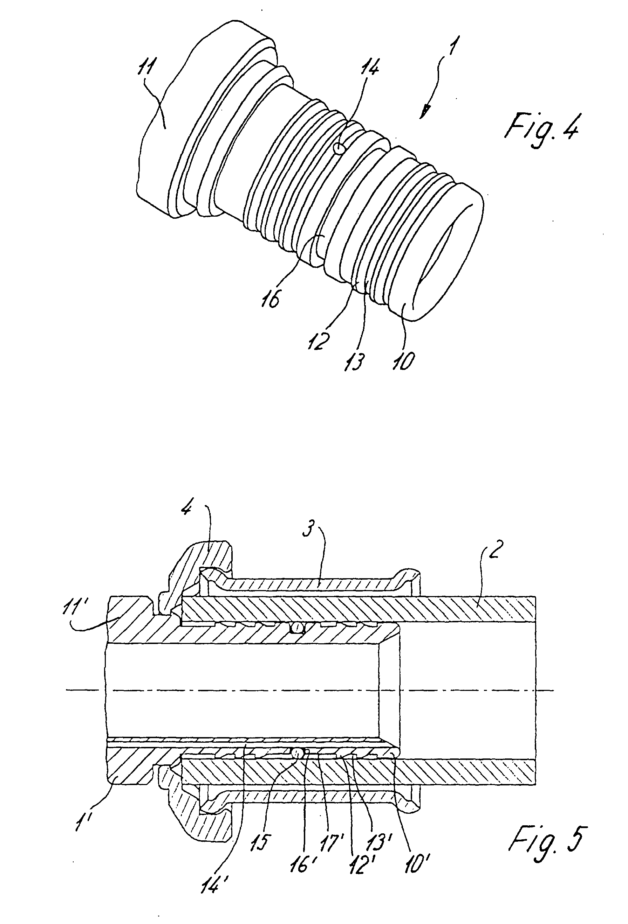

In den Figuren 1 bis 4 ist eine Verbindungsanordnung mit einem Stützrohr 1 gezeigt, das mit einem Stutzen 10 in einem Rohr 2 eingefügt ist. Das Rohr 2 kann beispielsweise als Verbundrohr ausgebildet sein, während der Stutzen 1 aus Metall oder Kunststoff hergestellt ist. An den Stutzen 10 schließt sich ein aus dem Rohr 2 herausragender Abschnitt 11 an, der Schultern aufweist, wobei die an den Stutzen 10 anschließende Schulter einen Anschlag für das Rohr 2 bildet. In dem Bereich des Stutzens 10 ist eine Presshülse 3 um das Rohr 2 angeordnet, die in axialer Richtung durch einen Ring 4 gehalten ist.

Der Stutzen 10 umfasst Rippen 12, zwischen denen Rillen 13 ausgebildet sind. Beim Verpressen gräbt sich das Material des Rohres 2 in die Rillen 13 ein, so dass das Stützrohr 1 in axialer Richtung in dem Rohr 2 gesichert ist. Ferner ist eine ringförmige Vertiefung 16 in dem Stützrohr 1 ausgebildet, in der ein Dichtring 15 aus elastischem Material aufgenommen ist.

In dem Stutzen 10 ist eine radiale Öffnung 14 vorgesehen, die ein in dem Rohr 2 befindliches Fluid nach außen durchtreten lässt. Von der Öffnung 14 kann das Fluid im unverpressten Zustand zu dem Abschnitt 11 des Stützrohres ausströmen, so dass ein versehentliches Vergessen des Verpressens umgehend erkannt wird. An den Rippen 12 zwischen der Öffnung 14 und dem aus dem Rohr 2 ragenden Abschnitt 11 können zusätzliche Ausnehmungen vorgesehen sein oder eine entsprechende Oberflächenrauhigkeit vorgesehen werden, damit ein Fluid im unverpressten Zustand nach außen abströmen kann.

Um die gezeigte Verbindungsanordnung abzudichten, greift ein Presswerkzeug um die Presshülse 3 und verpresst die Presshülse 3 zusammen mit dem Rohr 2 gegen die Stützhülse 1. Dadurch gelangt Material des Rohres 2 in die Mündung der Öffnung 14 und verschließt diese dauerhaft. Durch die Profilierungen am Stutzen 10 des Stützrohres 1 ist das Stützrohr 1 gegen eine Bewegung in dem Rohr 2 gesichert.

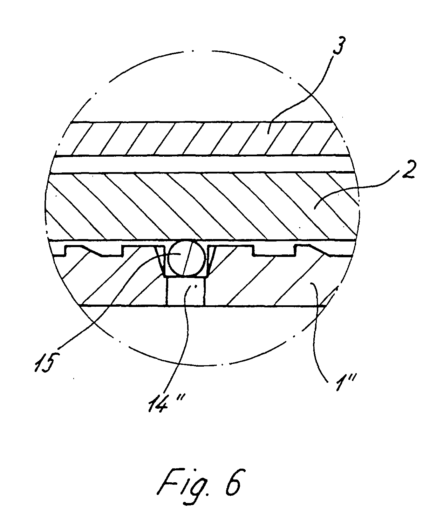

Bei dem in Fig. 5 gezeigten Ausführungsbeispiel ist ein Stützrohr 1' mit einem Stutzen 10' in ein Rohr 2 eingesteckt, das von einem Pressring und einem Fixierring 4 umgeben ist. In dem Stützrohr 1' ist eine durchgehende Öffnung 14' ausgespart, die sich in axialer Richtung durch das Stützrohr 1' bis in den aus dem Rohr 2 herausragenden Abschnitt 11' erstreckt. Im unverpressten Zustand kann daher Fluid durch die Öffnung 14' bis in den Abschnitt 11' gelangen, wobei durch entsprechende Kanäle das Fluid nach außen austreten kann, damit ein versehentliches Vergessen des Verpressens erfasst werden kann.

Die Öffnung 14' befindet sich dicht unterhalb der äußeren Oberfläche des Stutzens 10', an dem wiederum Rippen 12' und Rillen 13' angeformt sind. Im Bereich einer ringförmigen Aufnahme 16' ist ein Dichtring 15 eingelegt, wobei die Öffnung 14' unmittelbar benachbart zu der ringförmigen Aufnahme 16' angeordnet ist. Beim Verpressen der Presshülse 3 und des Rohres 2 kann die Öffnnung 14' einerseits durch Zusammendrücken des Stutzens 10' verschlossen werden und andererseits durch Eindrücken des Dichtringes 15 in die Öffnung 14' abgedichtet werden, so dass nach dem Verpressen kein Fluid mehr nach außen austreten kann. Im Bereich der einen Strömungskanal bildenden Öffnung 14' und des Dichtringes 15 ist am Außenumfang des Stutzens 10' eine Abflachung 17' vorgesehen, so dass beim Verpressen das Rohr 2 gegen diese Abflachung 17' gepresst wird und der Dichtring 15 dabei in die Öffnung 14 eingedrückt wird, um den Strömungskanal zu verschließen.

Ferner ist es möglich, die durchgehende Öffnung als einen axialen Kanal auszubilden, der wie eine Nut einen Strömungskanal vor dem Verpressen bildet. Der axiale Kanal bzw. die Längsnut am äußeren Umfang des Stutzens wird dann beim Verpressen durch das Rohr 2 verschlossen und abgedichtet.

In Fig. 6 ist eine dritte Ausführungsform eines Stützrohres 1" gezeigt, wobei lediglich der Bereich einer durchgehenden Öffnung 14" dargestellt ist, da die übrigen Elemente der Verbindungsanordnung außerhalb des dargestellten Bereiches denjenigen der Fig. 1 entsprechen können.

Die durchgehende Öffnung 14" erstreckt sich von einer Innenseite des Stützrohres 1" zu einem sich konisch erweiternden Mündungsabschnitt im Bereich eines Dichtringes 15 an der Außenseite des Stützrohres. Dadurch ist im unverpressten Zustand ein Spalt zwischen Dichtring 15 und Stützrohr 1" gebildet, der als Strömungskanal wirkt und daher ein Austreten eines flüssigen oder gasförmigen Fluides aus dem Rohr 2 ermöglicht. Durch Verpressen der Stützhülse 3 und des Rohres 2 wird der Dichtring 15 radial nach innen in die Öffnung 14" gedrückt und kann diese dicht verschließen. Da der Dichtring einen etwas größeren Querschnitt besitzt als der Durchmesser der Öffnung 14" außerhalb des Mündungsabschnittes, kann auf sichere Weise eine dauerhafte Abdichtung erzielt werden.

In den dargestellten Ausführungsbeispielen ist jeweils nur eine Öffnung 14 bzw. 14' an dem Stutzen 10' vorgesehen. Es ist auch möglich, mehrere Öffnungen 14 bzw. 14' in axialer und/oder radialer Richtung vorzusehen. Die Öffnung 14 kann sich auch schräg in dem Stützrohr 1 erstrecken. Ferner ist es möglich, das Stützrohr ohne einen Dichtring 15 auszubilden, da auch durch das Verpressen selbst eine Abdichtung erzielt werden kann.

## Patentansprüche

1. Pressrohrverbindungsanordnung, mit einer Presshülse und einem Stützrohr (1, 1'), das einen in ein Rohr (2) einfügbaren Stutzen (10) und einen sich daran anschließenden in montiertem Zustand aus dem Rohr (2) herausragenden Abschnitt (11) aufweist, wobei in dem Bereich des Stutzens (10) eine Presshülse (3) um das Rohr (2) angeordnet ist, **dadurch gekennzeichnet, dass** in dem Stützrohr (1, 1') mindestens eine durchgehende Öffnung (14, 14') vorgesehen ist, die durch Verpressen der Presshülse (3) und des Rohres (2) im Bereich des Stutzens (10, 10') abdichtbar ist.

2. Pressverbindungsanordnung nach Anspruch 1, **dadurch gekennzeichnet, dass** die durchgehende Öffnung (14) im wesentlichen in radialer Richtung in dem Stutzen ausgebildet ist und beim Verpressen durch das Rohr (2) verschließbar ist.

3. Pressverbindungsanordnung nach Anspruch 1 oder 2, **dadurch gekennzeichnet, dass** die durchgehende Öffnung (14') sich im wesentlichen in axialer Richtung durch den Stutzen (10') erstreckt und beim Verpressen durch eine Verformung des Stutzens (10') verschließbar ist.

4. Pressverbindungsanordnung nach einem der Ansprüche 1 bis 3, **dadurch gekennzeichnet, dass** die Öffnung (14, 14') einen Durchmesser von 0,1 bis 3 mm besitzt.

5. Pressverbindungsanordnung nach einem der Ansprüche 1 bis 4, **dadurch gekennzeichnet, dass** an dem Stutzen (10, 10') Rippen (12, 12') angeformt sind, die sich beim Verpressen in das Rohr (2) eingraben.

6. Pressverbindungsanordnung nach einem der Ansprüche 1 bis 5, **dadurch gekennzeichnet, dass** am Außenumfang des Stutzens (10, 10') zwischen der Mündung der Öffnung (14, 14') und dem aus dem Rohr (2) herausragenden Abschnitt (11, 11') eine einen Strömungskanal bildende Ausnehmung vorgesehen ist.

7. Pressverbindungsanordnung nach einem der Ansprüche 1 bis 6, **dadurch gekennzeichnet, dass** die Öffnung als Nut am Umfang des Stutzens einen Strömungskanal ausbildet.

8. Pressverbindungsanordnung nach einem der Ansprüche 1 bis 7, **dadurch gekennzeichnet, dass** die Öffnung (14") sich von einer Innenseite des Stützrohres (1") zu einem Dichtring (15) an einer Außenseite des Stützrohres (1'') erstreckt, wobei durch die Öffnung (14") im unverpressten Zustand ein Strömungskanal zwischen Innenseite und Außenseite des Stützrohres (1") gebildet ist.

9. Pressverbindungsanordnung nach Anspruch 8, **dadurch gekennzeichnet, dass** der äußere Mündungsabschnitt der Öffnung (14") sich im Bereich des Dichtringes (15) konische erweitert.

10. Pressverbindungsanordnung nach Anspruch 8 oder 9, **dadurch gekennzeichnet, dass** die Öffnung (14") unterhalb des Dichtringes (15) einen kleineren Querschnitt besitzt als der Dichtring (15).

11. Pressverbindungsanordnung nach einem der Ansprüche 1 bis 10, **dadurch gekennzeichnet, dass** das Stützrohr aus Metall oder Kunststoff ausgebildet ist.

## Claims

1. Crimped pipe connection arrangement, having a crimping sleeve and a supporting pipe (1, 1') which has a connection piece (10), which can be fitted into a pipe (2), and an adjoining section (11) projecting from the pipe (2) in the fitted state, a crimping sleeve (3) being arranged around the pipe (2) in the region of the connection piece (10), **characterized in that** at least one through-opening (14, 14') is provided in the supporting pipe (1, 1'), and this through-opening (14, 14') can be sealed off by crimping the crimping sleeve (3) and the pipe (2) in the region of the connection piece (10, 10').

2. Crimped connection arrangement according to Claim 1, **characterized in that** the through-opening (14) is formed essentially in the radial direction in the connection piece and can be closed by the pipe (2) during the crimping.

3. Crimped connection arrangement according to Claim 1 or 2, **characterized in that** the through-opening (14') extends essentially in the axial direction through the connection piece (10') and can be closed by deformation of the connection piece (10') during the crimping.

4. Crimped connection arrangement according to one of Claims 1 to 3, **characterized in that** the opening (14, 14') has a diameter of 0.1 to 3 mm.

5. Crimped connection arrangement according to one of Claims 1 to 4, **characterized in that** ribs (12, 12') are integrally formed on the connection piece (10, 10') and dig into the pipe (2) during the crimping.

6. Crimped connection arrangement according to one of Claims 1 to 5, **characterized in that** a recessed portion forming a flow passage is provided on the outer circumference of the connection piece (10, 10') between the orifice of the opening (14, 14') and the section (11, 11') projecting from the pipe (2).

7. Crimped connection arrangement according to one of Claims 1 to 6, **characterized in that** the opening forms a flow passage as a slot on the outer circumference of the connection piece.

8. Crimped connection arrangement according to one of Claims 1 to 7, **characterized in that** the opening (14'') extends from an inside of the supporting pipe (1'') to a sealing ring (15) on an outside of the supporting pipe (1''), a flow passage being formed by the opening (14'') between the inside and outside of the supporting pipe (1'') in the uncrimped state.

9. Crimped connection arrangement according to Claim 8, **characterized in that** the outer orifice section of the opening (14'') is conically widened in the region of the sealing ring (15).

10. Crimped connection arrangement according to Claim 8 or 9, **characterized in that** the opening (14'') below the sealing ring (15) has a smaller cross section than the sealing ring (15).

11. Crimped connection arrangement according to one of Claims 1 to 10, **characterized in that** the supporting pipe is formed from metal or plastic.

## Revendications

1. Agencement de raccord serti pour tubes, avec un manchon de sertissage et un tube de soutien (1, 1') qui comporte une tubulure (10), pouvant être insérée dans un tube (2), et une portion (11) se raccordant à celle-ci et ressortant à l'état monté du tube (2), un manchon de sertissage (3) étant disposé autour du tube (2) dans la zone de la tubulure (10), **caractérisé en ce que** dans le tube de soutien (1, 1') est prévue au moins une ouverture débouchante (14, 14') qui peut être rendue étanche dans la zone de la tubulure (10, 10'), par sertissage du manchon de sertissage (3) et du tube (2).

2. Agencement de raccord serti pour tubes selon la revendication 1, **caractérisé en ce que** l'ouverture débouchante (14) est réalisée sensiblement dans la direction radiale, dans la tubulure et peut être fermée par le tube (2), lors du sertissage.

3. Agencement de raccord serti pour tubes selon la revendication 1 ou 2, **caractérisé en ce que** l'ouverture débouchante (14') s'étend à travers la tubulure (10') sensiblement dans la direction axiale et peut être fermée, lors du sertissage, par une déformation de la tubulure (10').

4. Agencement de raccord serti pour tubes selon l'une des revendications 1 à 3, **caractérisé en ce que** l'ouverture (14, 14') présente un diamètre de 0,1 à 3 mm.

5. Agencement de raccord serti pour tubes selon l'une des revendications 1 à 4, **caractérisé en ce que** sur la tubulure (10, 10') sont formées des nervures (12, 12') qui s'enfoncent dans le tube (2) lors du sertissage.

6. Agencement de raccord serti pour tubes selon l'une des revendications 1 à 5, **caractérisé en ce qu'**un évidement formant un canal d'écoulement est prévu sur le pourtour extérieur de la tubulure (10, 10'), entre l'embouchure de l'ouverture (14, 14') et la portion (11, 11') ressortant du tube (2).

7. Agencement de raccord serti pour tubes selon l'une des revendications 1 à 6, **caractérisé en ce que** l'ouverture réalise, en tant que rainure sur le pourtour de la tubulure, un canal d'écoulement.

8. Agencement de raccord serti pour tubes selon l'une des revendications 1 à 7, **caractérisé en ce que** l'ouverture (14") s'étend depuis un côté intérieur du tube de soutien (1") vers une bague d'étanchéité (15) sur un côté extérieur du tube de soutien (1"), un canal d'écoulement étant formé à travers l'ouverture (14"), à l'état non serti, entre le côté intérieur et le côté extérieur du tube de soutien (1").

9. Agencement de raccord serti pour tubes selon la revendication 8, **caractérisé en ce que** la partie extérieure de l'embouchure de l'ouverture (14") s'élargit coniquement dans la zone de la bague d'étanchéité (15).

10. Agencement de raccord serti pour tubes selon la revendication 8 ou 9, **caractérisé en ce que** l'ouverture (14") présente, au-dessous de la bague d'étanchéité (15), une plus petite section que la bague d'étanchéité (15).

11. Agencement de raccord serti pour tubes selon l'une des revendications 1 à 10, **caractérisé en ce que** le tube de soutien est réalisé en métal ou en matière plastique.
